(19) Europäisches Patentamt
European Patent Office
Office européen des brevets

(11) Veröffentlichungsnummer: **0 371 916 B1**

(12) # EUROPÄISCHE PATENTSCHRIFT

(45) Veröffentlichungstag der Patentschrift: **27.07.94**

(51) Int. Cl.$^5$: **C08G 18/32**, C08G 18/10, //B29C41/04,B29C39/02

(21) Anmeldenummer: **89810872.5**

(22) Anmeldetag: **14.11.89**

Die Akte enthält technische Angaben, die nach dem Eingang der Anmeldung eingereicht wurden und die nicht in dieser Patentschrift enthalten sind.

(54) **Härtbare Giessharze auf Polyurethanbasis und Aminhärter für diese Harze.**

(30) Priorität: **21.11.88 US 274081**

(43) Veröffentlichungstag der Anmeldung:
**06.06.90 Patentblatt 90/23**

(45) Bekanntmachung des Hinweises auf die Patenterteilung:
**27.07.94 Patentblatt 94/30**

(84) Benannte Vertragsstaaten:
**DE ES FR GB IT NL SE**

(56) Entgegenhaltungen:
**EP-A- 0 288 823**
**US-A- 3 428 610**

(73) Patentinhaber: **CIBA-GEIGY AG**
**Klybeckstrasse 141**
**CH-4002 Basel(CH)**

(72) Erfinder: **Miyazaki, Teruko**
**3833 Sandlewood Drive**
**Okemos Michigan 48864(US)**

EP 0 371 916 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Chemie der Kombination von Polyisocyanaten und Polyolen zur Herstellung von Präpolymeren und die Chemie der Hartung dieser Präpolymeren mit Verbindungen enthaltend aktive Wasserstoffatome ist an sich bekannt. Solche Polyurethansysteme sind bereits in verschiedenen Anwendungen, zum Beispiel als Giessharze, Beschichtungen, Enkapsulierharze und generell zur Herstellung von Polyurethanelastomeren eingesetzt worden.

Bekannte Systeme besitzen hinsichtlich einiger dieser Anwendungen nicht die optimalen Eigenschaften, insbesondere wenn sie als Giessharze ohne die Verwendung des als karzinogen angesehenen 4,4'-Methylendianilins eingesetzt werden.

Es besteht insbesondere noch ein Bedarf nach härtbaren Polyurethansystemen, die für den Einsatz im Schleuderguss oder im Oberflächenguss geeignet sind, und bei denen auf die Verwendung von 4,4'-Methylendianilin verzichtet werden kann.

An die Eigenschaften solcher Systeme werden üblicherweise spezifische Anforderungen gestellt, wie eine minimale Färbung, hohe Hitzebeständigkeit, geringes Schrumpfen, hohe Festigkeit und Schlagzähigkeit und niedrige Viskosität, um das Mischen und Vergiessen des Systems zu erleichtern.

Die EP-A 0 288 823 beschreibt ein Verfahren zur Herstellung von Präpolymeren auf Basis von Toluoldiisocyanat und langkettigen Polyolen, die mit aromatischen Diaminen zu Polyurethan/Polyharnstoff-Elastomeren mit guten Hochtemperatur-Eigenschaften gehärtet werden können.
Im US-Patent 3 428 610 werden isocyanat-terminierte Präpolymere offenbart, die mit spezifischen Aminhärtern in relativ kurzer Zeit bei Raumtemperatur gehärtet werden können. Als geeignete Aminhärter werden flüssige aromatische Diamine mit Alkylsubstituenten an beiden ortho-Positionen zu mindestens einer Aminogruppe, wie beispielsweise Diethyltoluoldiamin, angegeben.

Mit der vorliegenden Erfindung werden ein giessfähiges Polyurethansystem und ein Aminhärtersystem bereitgestellt, bei denen ohne 4,4'-Methylendianilin gearbeitet werden kann.

Ferner wird mit der vorliegenden Erfindung ein ungefülltes, bei Raumtemperatur härtendes Giessharzsystem bereitgestellt, das gegenüber Feuchtigkeit unempfindlich ist und mit dem ein festes und zähes Polyurethan-Polyharnstoff Elastomeres hergestellt werden kann, welches zum Einsatz im Schleuderguss bzw. im Oberflächenguss geeignet ist.

Der Begriff "Oberflächenguss" beschreibt ein spezielles Giessverfahren, worin die Oberfläche oder ein Teil der Oberfläche eines Kernmaterials, beispielsweise eines oder mehrerer Blöcke, mit einem Harz mittels eines Giessverfahrens beschichtet werden. Dazu wird besagtes Kernmaterial, in der Regel ein Füllstoff, in eine Gussform gegeben und anschliessend wird das Giessharz in die Gussform gegossen, um wenigstens einen Teil der Oberfläche des besagten Kernmaterials zu bedecken.

Mit der vorliegenden Erfindung wird ferner ein verbessertes Schleuderguss- und Oberflächengussverfahren bereitgestellt, worin die härtbaren Polyurethangiessharzsysteme der vorliegenden Erfindung eingesetzt werden.

Es wurde überraschenderweise gefunden, dass man durch Kombination von Diethyltoluoldiamin mit einem 4,4'-Methylendianilin, das an wenigstens einer ortho-Position zu jeder Aminogruppe mit einer Alkylgruppe substituiert ist, insbesondere mit 4,4'-Methylen-bis-(ortho-ethylanilin), einen verbesserten nichttoxischen Aminhärter herstellen kann, der, in einem hartbaren Polyurethan Giessharzsystem eingesetzt, zu einem Polyurethansystem fuhrt, das sich im Schleuderguss und Oberflächenguss einsetzen lässt. Durch Umsetzung von besagtem Aminhärter mit einem Isocyanatharz erhält man Polyurethansysteme mit ausgezeichneten Eigenschaften. Solche Systeme zeichnen sich durch gute Hitzebeständigkeit, eine geringe Schrumpfung, hohe Festigkeit, hohe Schlagzähigkeit und eine genügend hohe Wärmestandfestigkeit aus. Ferner zeichnen sich die Komponenten des Giessharzsystems durch relativ geringe Viskositäten aus, was ihr Vermischen und Vergiessen erleichtert.

Der Aminhärter der vorliegenden Erfindung enthält Diethyltoluoldiamin und ein 4,4'-Methylendianilin, das an wenigstens einer ortho-Position zu jeder Aminogruppe mit einer Alkylgruppe substituiert ist, insbesondere 4,4'-Methylen-bis-(ortho-ethylanilin), worin das Molverhältnis von Diethyltoluoldiamin zu 4,4'-Methylen-dianilinderivat etwa 99:1 bis 1:99 beträgt, vorzugsweise jedoch etwa 50:50 bis 95:5 und ganz besonders bevorzugt etwa 1:9.

Vorzugsweise enthält der erfindungsgemässe Aminhärter Diethyltoluoldiamin.

Das Diethyltoluoldiamin, das als Komponente in der erfindungsgemässen Härterzusammensetzung eingesetzt wird, ist vorzugsweise eine Mischung verschiedener Isomerer. Es können auch die reinen Isomeren eingesetzt werden. Ein bevorzugtes Isomer ist das Diamin der Formel

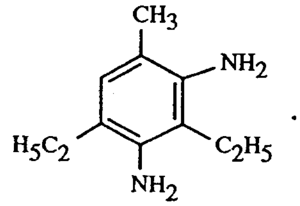

Dieses Isomer ist üblicherweise die vorherrschende Komponente in Isomermischungen. Ein weiteres bevorzugtes Isomeres ist 3,5-Diethyl-toluol-2,6-diamin. Kommerziell erhältliche Mischungen enthalten in der Regel etwa 75 Gew.% des 3,5-Diethyl-2,4-diaminoisomeren, etwa 20 Gew.% des 3,5-Diethyl-2,6-diaminoisomeren und als Rest Komponenten mit verwandter Struktur.

Das ortho-alkylsubstituierte 4,4'-Methylendianilin, das als Komponente in dem erfindungsgemässen Aminhärter eingesetzt wird, ist üblicherweise eine flüssige oder niedrig schmelzende Verbindung. Diese Diamine sind durch die Anwesenheit eines Alkylsubstituenten in wenigstens einer ortho-Position zu jeder Aminogruppe gekennzeichnet.

Beispiele für bevorzugte Verbindungen dieses Typs sind 3-Methyl-3'-ethyl-4,4'-diamino-diphenylmethan, 3,3'-Dimethyl-5,5'-diisopropyl-4,4'-diamino-diphenylmethan, 3,3',-5,5'-Tetraisopropyl-4,4'-diamino-diphenylmethan, und ganz besonders bevorzugt 3,3'-Diethyl-4,4'-diamino-diphenylmethan [4,4'-Methylen-bis-(ortho-ethylanilin)].

Der Härter kann zusätzlich Weichmacher enthalten, wie Phthalsäureester, beispielsweise Phthalsäuredialkylester, insbesondere Dibutylphthalat; oder Phthalsäurealkylbenzylester; oder Adipinsäureester, wie Adipinsäuredialkylester; oder Benzoesäureester des Dialkylenglykols; Glutarsäureester; epoxidierte pflanzliche Oele; Phosphate, wie Alkyldiarylphosphate und Triarylphosphate; oder N-substituierte Pyrrolidone.

Bevorzugter Weichmacher ist Dibutylphthalat.

Das erfindungsgemässe härtbare Polyurethangiessharzsystem enthält den oben definierten Aminhärter und ein Isocyanatharz. Der Aminhärter und das Isocyanatharz werden im allgemeinen in einem Verhältnis von etwa 32:68 bis etwa 40:60 Gew.%, vorzugsweise von etwa 35:65 bis etwa 39:61 Gew.%, ganz besonders bevorzugt von etwa 37:63 bis etwa 38:62 Gew.% eingesetzt.

Das Isocyanatharz umfasst im allgemeinen isocyanat-terminierte Präpolymere auf der Basis von Polyisocyanaten und Polyolen.

Bei dem Polyisocyanat handelt es sich im allgemeinen um ein flüssiges aliphatisches, cycloaliphatisches oder araliphatisches Polyisocyanat. Beispiele für solche Verbindungen sind 3-Isocyanatomethyl-3,5,5-trimethylcyclohexylisocyanat (Isophorondiisocyanat), 4,4'-Methylen-bis-(cyclohexylisocyanat), Hexamethylendiisocyanat, das Biuret von Hexamethylendiisocyanat, 1,3-Cyclohexan-bis-(methylisocyanat), 2,2,4-Trimethylhexamethylendiisocyanat und Kombinationen dieser Verbindungen, so wie verwandte aliphatische und cycloaliphatische Polyisocyanate, die mit zusätzlichen organischen oder anorganischen Gruppen substituiert sein können, welche den Reaktionsverauf nicht negativ beeinflussen.

Bevorzugt werden 4,4'-Methylen-bis-(cyclohexylisocyanat), m-Xylylendiisocyanat und Isophorondiisocyanat.

Der Begriff "aliphatisch" im Sinne dieser Beschreibung umfasst solche Kohlenstoffketten, die im wesentlichen nicht aromatischer Natur sind. Dabei kann es sich um gesättigte oder um ungesättigte, unverzweigte oder verzweigte oder cyclische Konfigurationen handeln, welche zusätzlich Substituenten tragen können. Solche aliphatischen Isocyanate haben im allgemeinen ein Aequivalentgewicht von 60 bis 160 und eine Viskosität von 1,0 bis 1500,0 cP bei 25 ° C. Als Beispiele für flüssige langkettige aliphatische Polyisocyanate sind Dodecamethylen-$\alpha,\omega$-diisocyanat und Tridecamethylen-$\alpha,\omega$-diisocyanat zu erwähnen.

Bei den isocyanat-terminierten Präpolymeren handelt es sich beispielsweise um ein Gemisch aus mit 4,4'-Methylen-bis(cyclohexylisocyanat) terminiertem Polytetramethylenetherglykol und mit Isophorondiisocyanat terminiertem Polytetramethylenetherglykol.

Polyole, die in der vorliegenden Erfindung eingesetzt werden können, sind beispielsweise Polyetherdiole, Polyethertriole, Polyethertetrole und Polyesterpolyole, wie Caprolactonpolyole.

Geeignete Polyetherpolyole umfassen aliphatische Alkylenglykolpolymere mit einer Alkyleneinheit von wenigstens zwei Kohlenstoffatomen. Zu diesen aliphatischen Alkylenglykolpolymeren zählen beispielsweise Polyoxypropylenglykol und Polytetramethylenetherglykol. Es sind di- tri- und tetrafunktionelle Verbindungen verfügbar, wovon die trifunktionellen beispielsweise Reaktionsprodukte von Glycerin oder von Trimethylolpropan und Propylenoxid sind. Ein typisches Polyetherpolyol ist von der Fa. Union Carbide unter der Bezeichnung NIAX® PPG-425 erhältlich.

Bevorzugt werden die difunktionellen Verbindungen.

Geeignete Polyetherpolyole besitzen im allgemeinen Molekulargewichte von 60 - 7000, wobei die Diole im allgemeinen Molekulargewichte von 60 - 4000, die Triole im allgemeinen Molekulargewichte von 400 - 7000 und die Tetrole im allgemeinen Molekulargewichte von 400 - 600 aufweisen.

Die besonders bevorzugten Polytetramethylenetherglykole weisen im allgemeinen Molekulargewichte von etwa 250 bis etwa 2900 auf, die besonders bevorzugten Polypropylenetherglykole weisen im allgemeinen Molekulargewichte von etwa 425 bis etwa 2000 auf, und die besonders bevorzugten ethylenoxidverkappten Polypropylenetherglykole weisen im allgemeinen Molekulargewichte von etwa 650 bis etwa 2000 auf.

Man kann auch Gemische dieser Polyole einsetzen.

Das Molverhältnis von Isocyanaten zu Polyolen wird anhand der gewünschten Eigenschaften festgelegt und kann vom Fachmann anhand von Routineexperimenten ermittelt werden.

Bei der Herstellung des in der vorliegenden Erfindung einzusetzenden Isocyanatharzes wird im allgemeinen ein Katalysator zu der Reaktionsmischung aus Isocyanaten und Polyolen zugegeben, wobei der Katalysator ausgewählt wird aus der Gruppe bestehend aus Organoquecksilbersalzen, Organozinnverbindungen, Wismuthneodecanoat und tertiären Aminen. Vorzugsweise setzt man Dibutylzinndilaurat als Katalysator ein. Bei Verwendung dieses Katalysators wird eine Reaktionszeit von etwa einer Stunde bei einer Temperatur von etwa 80 °C bis etwa 100 °C, vorzugsweise bei etwa 80 °C, benötigt.

Das erfindungsgemässe Polyurethangiessharzsystem kann gegebenenfalls an sich übliche Zusätze enthalten. Dazu zählen beispielsweise Antischaummittel, wie Glycerin, ein Copolymeres auf Basis von Acrylsäureethylester und Acrylsäure2-ethylhexylester, Dimethylsiloxan-Copolymere und Silicone; Antioxidantien, wie Ester der β-(3,5-Di-tert.butyl-4-hydroxyphenyl)-propionsäure mit ein- oder mehrwertigen Alkoholen, beispielsweise mit Methanol, Octadecanol, 1,6-Hexandiol, Neopentylglykol, Thiodiethylenglykol, Diethylenglykol, Triethylenglykol, Pentaerythrit, Tris-hydroxyethylisocyanurat und Di-hydroxyethyldiamid der Oxalsäure; UV-Absorber und Lichtstabilisatoren, wie 2-(2'-Hydroxyphenyl)-benzotriazole und sterisch gehinderte Amine, wie Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, das Kondensationsprodukt von 1-Hydroxyethyl-2,2,6,6-tetramethyl-4-hydroxypiperidin und Bernsteinsäure, das Kondensationsprodukt von N,N'-(2,2,6,6-Tetramethylpiperidyl)-hexamethylendiamin und 4-tert.Octylamino-2,6-dichloro-1,3,5-s-triazin, Tris-(2,2,6,6-tetramethylpiperidyl)-nitrilotriacetat, Tetrakis-(2,2,6,6-tetramethyl-4-piperidyl)-1,2,3,4-butan-tetracarbonsäure und 1,1'-(1,2-Ethandiyl)-bis-(3,3,5,5-tetramethylpiperazinon); Weichmacher, wie die oben beispielhaft erwähnten Verbindungsklassen; Fungizide; Pigmente; Farbstoffe; Reaktivfarbstoffe; Feuchtigkeitsfänger; Stabilisatoren, wie Säurechloride und Chlorwasserstoff.

Die Erfindung betrifft ferner ein Verfahren zur Herstellung von Polyurethangiesslingen umfassend die Schritte:

i) Vermischen eines Isocyanatharzes und eines erfindungsgemässen Aminhärters,

ii) Giessen besagter Mischung in eine Form, und

iii) Belassen besagter Mischung bei einer Temperatur, vorzugsweise bei Raumtemperatur, und für eine solche Zeitspanne in besagter Form, so dass die Mischung sich verfestigt und sich ein Giessling ausbildet.

Die gehärteten Produkte sind ebenfalls ein Gegenstand der vorliegenden Erfindung.

Das verbesserte erfindungsgemässe Schleudergussverfahren umfasst die folgenden Schritte:

a) Erhitzen des Isocyanatharzes und des erfindungsgemässen Aminhärters, um das Vermischen der Komponenten zu erleichtern, vorzugsweise auf etwa 38 °C;

b) Vermischen besagten Isocyanatharzes und besagten Aminhärters;

c) teilweises Auffüllen einer Gussform mit besagter Mischung, vorzugsweise Auffüllen bis zur Hälfte der Form;

d) Schliessen der Gussform;

e) Versetzen besagter Gussform in eine Drehbewegung um wenigstens eine Drehachse, vorzugsweise um zwei aufeinander senkrecht stehende Drehachsen, beispielsweise durch Versetzen besagter Gussform in eine horizontale Drehbewegung und gleichzeitig in eine vertikale Drehbewegung, solange bis sich besagte Mischung unter Ausbildung eines Polyurethangiesslings verfestigt hat; und

f) Entfernen besagten Polyurethangiesslings aus der Gussform.

Der nach dem erfindungsgemässen Verfahren erhältliche Giessling besitzt eine zum Entformen und für die weitere Handhabung ausreichende Schlagzähigkeit.

Das verbesserte erfindungsgemässe Oberflächengussverfahren zur Herstellung von Polyurethangiesskörpern umfasst die Schritte:

a) Vermischen des Isocyanatharzes und des erfindungsgemässen Aminhärters;

b) Entgasen besagter Mischung;
c) Giessen besagter Mischung in eine Gussform für den Oberflächenguss;
d) Harten besagter Mischung bei etwa Raumtemperatur für eine Zeit, die ausreicht, um einen Polyurethangiessling auszubilden, beispielsweise für etwa 16 bis etwa 24 Stunden; und
e) Entfernen besagten Polyurethangiesslings aus der Form.

Die damit erhältlichen Giesslinge zeigen keine Risse oder Haarrisse.

Die folgenden Beispiele erläutern die Erfindung.

**Beispiel 1**: Herstellung des Isocyanatharzes

| Bestandteile | Gewichtsteile |
|---|---|
| mit Ethylenoxid verkapptes Polypropylenetherglycol (MG 650) | 880 |
| Polytetramethylenetherglycol (MG 650) | 440 |
| Polytetramethylenetherglycol (MG 1000) | 622,24 |
| Methylen-bis-(4-cyclohexylisocyanat) | 1776 |
| Isophorondiisocyanat | 280 |
| Dibutylzinndilaurat | 0,12 |
| Silicon | 1,20 |
| Benzoylchlorid | 0,44 |

Ein Fünfliterrundkolben mit einem Vierhalsaufsatz wird mit mechanischem Rührer, Thermometer, Stickstoffeinlassrohr, Vakuumanschluss und regulierbarem Heizmantel versehen. Die drei Polyole werden in den Rundkolben gegeben und eine Stunde lang unter Vakuum bei 80 °C gerührt Die beiden Isocyanate und das Dibutylzinndilaurat werden zugegeben und die Reaktionsmischung wird eine Stunde lang bei 80 bis 100 °C unter Stickstoff gerührt. Das Ende der Reaktion wird mittels Analyse des Prozentgehalts an NCO-Gruppen bestimmt. Das Silicon wird zugegeben und die Mischung wird auf 50 °C abgekühlt, während sie im Vakuum entgast wird. Anschliessend wird Benzoylchlorid zugegeben und das Entgasen wird fortgesetzt, bis das Produkt auf Raumtemperatur abgekühlt ist. Dann wird der endgültige NCO-Gehalt bestimmt.

**Beispiel 2**: Herstellung des Härters

| Bestandteile | Gewichtsteile |
|---|---|
| 4,4'-Methylen-bis-(ortho-ethylanilin) | 1188,0 |
| Diethyltoluoldiamin | 91,2 |
| Dibutylphthalat | 1120,8. |

Ein Dreiliterrundkolben mit einem Vierhalsaufsatz wird mit mechanischem Rührer, Thermometer, Vakuumanschluss und regulierbarem Heizmantel versehen. Alle Bestandteile werden eingefüllt und es wird eine Stunde lang bei 80 °C unter Vakuum gerührt. Der Feuchtigkeitsgehalt wird bestimmt und wird unterhalb von 0,05 Gew.% gehalten. Die Mischung wird weiter unter Vakuum gerührt, bis sie auf Raumtemperatur abgekühlt ist.

**Beispiel 3**: Eigenschaften einer Kombination des Isocyanatharzes mit dem erfindungsgemässen Aminhärter

Das Harz aus Beispiel 1 und der Härter gemäss Beispiel 2 werden in einem Gewichtsverhältnis von 100:60 miteinander vermischt, entgast und zur Herstellung von Probekörpern vergossen. In Tabelle I sind die ausgezeichneten Eigenschaften des härtbaren Gemisches und der gehärteten Proben aufgelistet.

**Tabelle I**

| Eigenschaft | Messmethode | Ergebnis |
|---|---|---|
| Viskosität (bei 25°C) | Brookfield RVF | |
| - Harz | Spindel #4 (20 U/min) | 7600-9300 cP |
| - Härter | Spindel #1 (20 U/min) | 120- 150 cP |
| - Mischung | Spindel #4 (20 U/min) | 2300-2500 cP |
| Gebrauchsdauer (bei 25°C)[2)] | 160 g; Viskosität bis 5000 cP [Brookfield RVF Spindel #4 (20 U/min)] | 10-20 Minuten |
| Gelzeit (bei 25°C)[2)] | 160 g; Viskosität bis 100000 cP [Brookfield RVF; Sp. #4 (2 U/min)] | 17-21 Minuten |
| spezifisches Gewicht | | |
| - Harz | WPG Becher | 1,06 ($g/cm^3$) |
| - Härter | WPG Becher | 1,05 ($g/cm^3$) |
| - gehärtetes Produkt[1)] | ASTM D-792 | 1,09 ($g/cm^3$) |
| Schrumpfung[1)] | ATSM D-2566 | 0,0023 in/in (cm/cm) |
| Zugfestigkeit[1)] | ASTM D-638 | 3850 psi (26,6 $N/mm^2$) |
| Dehnung[1)] | ASTM D-638 | 240 % |
| Reissfestigkeit[1)] | ASTM D-624 | 692 psi (4,8 $N/mm^2$) |
| Härte[1)] | ASTM D-2240 | 65 D |
| Wärmeformbeständigkeit bei 66 psi (455 kPa)[1)] | ASTM D-648 | 61°C |
| maximale Exothermie[3)] | 454 g; Honeywell Temperature Recorder mit Thermoelement J | 84°C |

[1)] Geprüft nach sieben Tagen Härtung bei Raumtemperatur

[2)] Die Gelzeit und die Gebrauchsdauer werden bestimmt, indem ein Viskositätsprofil von 160 g einer Mischung bestimmt wird. Dies erfolgt mit Hilfe eines Brookfield RVF Viskosimeters mit Spindel #4. Beim Viskositätsaufbau wird die Umdrehungsgeschwindigkeit der Spindel verringert um die Viskosität auf einer Skala erfassen zu können. Die Zeit in der ein Viskositätsaufbau bis zu 5000 cP bzw. bis zu 100000 cP erzielt werden, werden

als Gebrauchsdauer bzw. Gelzeit charakterisiert. Gelzeit bzw. Gebrauchsdauer sind ein Mass für die für Handhabbarkeit der Mischung, wie Mischen, Entgasen und Anwendung des Systems, zur Verfügung stehende Zeit bzw. für die Zeit die zur Gelierung und Härtung des Systems notwendig ist. Man benötigt eine ausreichend lange Gelzeit und Gebrauchsdauer, um das System zu vermischen, zu entgasen und anzuwenden. Auf der anderen Seite sollen Gelier- und Härtungszeit nicht zu lang sein, so dass der Produktionsprozess nicht übermässig verzögert wird.

3) Die maximale Exothermie beeinflusst die Schrumpfung, das Verspröden und den Verzug von Giesslingen sowie die Gelzeit und die Härtungsdauer des Systems. Zu hohe maximale Exothermien rufen Schrumpfung, Versprödung und Verzug der Giesslinge hervor und zu niedrige maximale Exothermien bewirken zu lange Gelierungs- und Härtungszeiten und verzögern somit den Herstellungsprozess.

**Beispiel 4**: Oberflächenguss

Ein leichtgewichtiger, gefüllter Block auf Epoxidharzbasis (1-6/8" x 3-6/8" x 9-6/8" = 3,2-19 mm x 9,5-19 mm x 28,5-19 mm) wird in einer geschlossenen Stahlform (innere Abmessungen 2" x 4" x 10" = 5,1 cm x 10,2 cm x 25,4 cm), die mit Entformungsmittel versehen ist, mit Schrauben hängend aufgespannt. Dabei bleibt ein Raum von mindestens 1/8 Inch (3,2 mm) um den gesamten Block herum frei, der mit Polyurethan angefüllt werden kann.

270 g des Harzes gemäss Beispiel 1 und 162 g des Härters gemäss Beispiel 2 werden in einem trockenen Behälter vermischt, 3 bis 5 Minuten lang in einer Vakuumkammer entgast, um Lufteinschlüsse zu entfernen, und durch die Oeffnung an der Oberseite der Stahlform in diese eingefüllt, bis das Harz aus den Belüftungsöffnungen hinausfliesst. Das System wird 16 bis 24 Stunden bei Raumtemperatur härten gelassen. Nach dem Entformen des Blockes ist dieser mit einer Polyurethanschicht von 1/8 Inch (3,2 mm) Dicke bedeckt, welche keine Versprödung oder Verzüge aufweist.

**Beispiel 5**: Schleuderguss

Harz gemäss Beispiel 1 und Härter gemäss Beispiel 2 werden vor dem Vermischen auf 38 °C erwärmt. Die Form wird zur Hälfte mit dem Gemisch gefüllt, geschlossen und in die Schleudergussvorrichtung eingefügt. Nun wird die Gussform in eine horizontale Drehbewegung und gleichzeitig in einer vertikale Drehung versetzt, bis das Harz verfestigt ist (45 bis 60 Minuten). Die Geschwindigkeiten der Drehbewegungen hängen von der Form des Giesslings ab. Nach Oeffnen der Gussform hat sich ein hohler Giesskörper mit einheitlicher Wandstärke ausgebildet. Die Teile weisen eine ausreichende Schlagzähigkeit auf, so dass sie entformt und weiter gehandhabt werden können.

**Patentansprüche**

**Patentansprüche für folgende Vertragsstaaten : DE, FR, GB, IT, NL, SE**

1. Aminhärter enthaltend Diethyltoluoldiamin und ein 4,4'-Methylendianilin, das an wenigstens einer ortho-Position zu jeder Aminogruppe mit einer Alkylgruppe substituiert ist, in einem Molverhältnis von etwa 99:1 bis 1:99.

2. Aminhärter gemäss Anspruch 1, dadurch gekennzeichnet, dass das alkylsubstituierte 4,4'-Methylendianilin 4,4'-Methylen-bis-(ortho-ethylanilin) ist.

3. Aminhärter gemäss Anspruch 1, dadurch gekennzeichnet, dass diese zusätzlich einen Weichmacher enthält, der insbesondere ausgewählt wird aus der Gruppe bestehend aus Phthalsäuredialkylestern, Phthalsäurealkylbenzylestern, Adipinsäuredialkylestern, Benzoesäureestern des Dialkylenglykols, Glutarsäureestern, epoxidierten pflanzlichen Oelen, Alkyldiarylphosphaten, Triarylphosphaten oder N-substituierten Pyrrolidonen.

**4.** Aminhärter gemäss Anspruch 3, dadurch gekennzeichnet, dass der Weichmacher Dibutylphthalat ist.

**5.** Härtbares Polyurethangiessharzsystem enthaltend einen Aminhärter gemäss Anspruch 1 und isocyanat-terminierte Polymere auf Basis von Polyisocyanaten und Polyolen.

**6.** Härtbares Polyurethangiessharzsystem gemäss Anspruch 5, dadurch gekennzeichnet, dass die Isocyanatkomponente besagter isocyanat-terminierter Polymerer ein aliphatisches, cycloaliphatisches oder araliphatisches Polyisocyanat ist, das vorzugsweise ausgewählt wird aus der Gruppe bestehend aus Methylen-bis-(4-cyclohexylisocyanat), Isophorondiisocyanat und m-Xylylendiisocyanat.

**7.** Härtbares Polyurethangiessharzsystem gemäss Anspruch 5, dadurch gekennzeichnet, dass besagte Polyole ausgewählt sind aus der Gruppe bestehend aus Polyetherdiolen, Polyethertriolen, Polyethertetrolen und Polyesterpolyolen.

**8.** Härtbares Polyurethangiessharzsystem gemäss Anspruch 7, dadurch gekennzeichnet, dass besagte Polyole Polyetherdiole sind, die insbesondere ausgewählt sind aus der Gruppe bestehend aus Polytetramethylenetherglykolen, Polypropylenetherglykolen, ethylenoxid-verkappten Polypropylenetherglykolen und Mischungen davon.

**9.** Härtbares Polyurethangiessharzsystem gemäss Anspruch 5, dadurch gekennzeichnet, dass besagter Aminhärter und besagtes Isocyanatharz in einem Verhältnis von etwa 32: 68 bis 40:60 Gew.%, insbesondere von etwa 35:65 bis 39:61 Gew.%, anwesend sind.

**10.** Härtbares Polyurethangiessharzsystem gemäss Anspruch 5, dadurch gekennzeichnet, dass besagtes Isocyanatharz das Reaktionsprodukt von mit Ethylenoxid verkapptem Polypropylenetherglykol oder Polytetramethylenetherglykol mit Methylen-bis-(4-cyclohexylisocyanat) und Isophorondiisocyanat umfasst.

**11.** Verfahren zur Herstellung von Polyurethangiesslingen umfassend die Schritte:
i) Vermischen eines Isocyanatharzes und eines Aminhärters gemäss Anspruch 1,
ii) Giessen besagter Mischung in eine Form, und
iii) Belassen besagter Mischung bei einer Temperatur und für eine solche Zeitspanne in besagter Form, so dass die Mischung sich verfestigt und sich ein Giessling ausbildet.

**12.** Schleudergussverfahren zur Herstellung von Polyurethangiesskörpern umfassend die Schritte
a) Erhitzen des Isocyanatharzes und des Aminhärters gemäss Anspruch 1, um das Vermischen der Komponenten zu erleichtern;
b) Vermischen besagten Isocyanatharzes und besagten Aminhärters;
c) teilweises Auffüllen einer Gussform mit besagter Mischung;
d) Schliessen der Gussform;
e) Versetzen besagter Gussform in eine Drehbewegung um wenigstens eine Drehachse, solange bis sich besagte Mischung unter Ausbildung eines Polyurethangiesslings verfestigt hat; und
f) Entfernen besagten Polyurethangiesslings aus der Gussform.

**13.** Oberflächengussverfahren zur Herstellung von Polyurethangiesskörpern umfassend die Schritte:
a) Vermischen des Isocyanatharzes und des Aminhärters gemäss Anspruch 1;
b) Entgasen besagter Mischung;
c) Giessen besagter Mischung in eine Gussform für den Oberflächenguss;
d) Härten besagter Mischung bei etwa Raumtemperatur für eine Zeit, die ausreicht, um einen Polyurethangiessling auszubilden; und
e) Entfernen besagten Polyurethangiesslings aus der Form.

**14.** Aminhärter gemäss Anspruch 1, enthaltend Diethyltoluoldiamin und ein 4,4'-Methylendianilin, das an wenigstens einer ortho-Position zu jeder Aminogruppe mit einer Alkylgruppe substituiert ist, in einem Molverhältnis von etwa 50:50 bis 5:95.

**Patentansprüche für folgenden Vertragsstaat : ES**

1. Verfahren zum Härten von Polyurethangiessharzsystemen umfassend das Vermischen eines Aminhärters und eines isocyanat-terminierte Polymeren auf Basis von Polyisocyanaten und Polyolen, dadurch gekennzeichnet, dass der Aminhärter Diethyltoluoldiamin und ein 4,4'-Methylendianilin, das an wenigstens einer ortho-Position zu jeder Aminogruppe mit einer Alkylgruppe substituiert ist, in einem Molverhältnis von etwa 99:1 bis 1:99, enthält.

2. Verfahren gemäss Anspruch 1, dadurch gekennzeichnet, dass das alkylsubstituierte 4,4'-Methylendianilin 4,4'-Methylen-bis-(ortho-ethylanilin) ist.

3. Verfahren gemäss Anspruch 1, dadurch gekennzeichnet, dass besagter Aminhärter zusätzlich einen Weichmacher enthält, der insbesondere ausgewählt wird aus der Gruppe bestehend aus Phthalsäuredialkylestern, Phthalsäurealkylbenzylestern, Adipinsäuredialkylestern, Benzoesäureestern des Dialkylenglykols, Glutarsäureestern, epoxidierten pflanzlichen Oelen, Alkyldiarylphosphaten, Triarylphosphaten oder N-substituierten Pyrrolidonen.

4. Verfahren gemäss Anspruch 1, dadurch gekennzeichnet, dass der Weichmacher Dibutylphthalat ist.

5. Verfahren gemäss Anspruch 1, dadurch gekennzeichnet, dass die Isocyanatkomponente besagter isocyanat-terminierter Polymerer ein aliphatisches, cycloaliphatisches oder araliphatisches Polyisocyanat ist, das vorzugsweise ausgewählt wird aus der Gruppe bestehend aus Methylen-bis-(4-cyclohexylisocyanat), Isophorondiisocyanat und m-Xylylendiisocyanat.

6. Verfahren gemäss Anspruch 1, dadurch gekennzeichnet, dass besagte Polyole ausgewählt sind aus der Gruppe bestehend aus Polyetherdiolen, Polyethertriolen, Polyethertetrolen und Polyesterpolyolen.

7. Verfahren gemäss Anspruch 6, dadurch gekennzeichnet, dass besagte Polyole Polyetherdiole sind, die insbesondere ausgewählt sind aus der Gruppe bestehend aus Polytetramethylenetherglykolen, Polypropylenetherglykolen, ethylenoxid-verkappten Polypropylenetherglykolen und Mischungen davon.

8. Verfahren gemäss Anspruch 1, dadurch gekennzeichnet, dass besagter Aminhärter und besagtes Isocyanatharz in einem Verhältnis von etwa 32:68 bis 40:60 Gew.%, insbesondere von etwa 35:65 bis 39:61 Gew.%, anwesend sind.

9. Verfahren gemäss Anspruch 1, dadurch gekennzeichnet, dass besagtes Isocyanatharz das Reaktionsprodukt von mit Ethylenoxid verkapptem Polypropylenetherglykol oder Polytetramethylenetherglykol mit Methylen-bis-(4-cyclohexylisocyanat) und Isophorondiisocyanat umfasst.

10. Verfahren gemäss Anspruch 1 zur Herstellung von Polyurethangiesslingen umfassend die Schritte:
    i) Vermischen eines Isocyanatharzes und eines Aminhärters gemäss Anspruch 1,
    ii) Giessen besagter Mischung in eine Form, und
    iii) Belassen besagter Mischung bei einer Temperatur und für eine solche Zeitspanne in besagter Form, so dass die Mischung sich verfestigt und sich ein Giessling ausbildet.

11. Schleudergussverfahren gemäss Anspruch 1 zur Herstellung von Polyurethangiesskörpern umfassend die Schritte
    a) Erhitzen des Isocyanatharzes und des Aminhärters gemäss Anspruch 1, um das Vermischen der Komponenten zu erleichtern;
    b) Vermischen besagten Isocyanatharzes und besagten Aminhärters;
    c) teilweises Auffüllen einer Gussform mit besagter Mischung;
    d) Schliessen der Gussform;
    e) Versetzen besagter Gussform in eine Drehbewegung um wenigstens eine Drehachse, solange bis sich besagte Mischung unter Ausbildung eines Polyurethangiesslings verfestigt hat; und
    f) Entfernen besagten Polyurethangiesslings aus der Gussform.

12. Oberflächengussverfahren gemäss Anspruch 1 zur Herstellung von Polyurethangiesskörpern umfassend die Schritte:

a) Vermischen des Isocyanatharzes und des Aminhärters gemäss Anspruch 1;
b) Entgasen besagter Mischung;
c) Giessen besagter Mischung in eine Gussform für den Oberflächenguss;
d) Härten besagter Mischung bei etwa Raumtemperatur für eine Zeit, die ausreicht, um einen Polyurethangiessling auszubilden; und
e) Entfernen besagten Polyurethangiesslings aus der Form.

**13.** Verfahren gemäss gemäss Anspruch 1, dadurch gekennzeichnet, dass der Aminhärter Diethyltoluoldiamin und ein 4,4'-Methylendianilin, das an wenigstens einer ortho-Position zu jeder Aminogruppe mit einer Alkylgruppe substituiert ist, in einem Molverhältnis von etwa 50:50 bis 5:95 enthält.

**Claims**
**Claims for the following Contracting States : DE, FR, GB, IT, NL, SE**

**1.** An amine hardener comprising diethyltoluenediamine and a 4,4'-methylenedianiline which is substituted in at least one ortho-position to each amino group with an alkyl group, in a molar ratio of from about 99:1 to 1:99.

**2.** An amine hardener according to claim 1, wherein the alkyl-substituted 4,4'-methylenedianiline is 4,4'-methylenebis(ortho-ethylaniline).

**3.** An amine hardener according to claim 1, further comprising a plasticizer which is in particular selected from the group consisting of dialkyl phthalates, alkylbenzyl phthalates, dialkyl adipates, benzoic esters of a dialkylene glycol, glutaric esters, epoxidized vegetable oils, alkyldiaryl phosphates, triaryl phosphates and N-substituted pyrrolidones.

**4.** An amine hardener according to claim 3, wherein the plasticizer is dibutyl phthalate.

**5.** A curable polyurethane casting resin system comprising an amine hardener according to claim 1, and isocyanate- terminated polymers based on polyisocyanates and polyols.

**6.** A curable polyurethane casting resin system according to claim 5, wherein the isocyanate component of said isocyanate-terminated polymers is an aliphatic, cycloaliphatic or araliphatic polyisocyanate which is preferably selected from the group consisting of methylenebis(4-cyclohexyl isocyanate), isophorone diisocyanate and m-xylylene diisocyanate.

**7.** A curable polyurethane casting resin system according to claim 5, wherein said polyols are selected from the group consisting of polyether diols, polyether triols, polyether tetraols and polyester polyols.

**8.** A curable polyurethane casting resin system according to claim 7, wherein said polyols are polyether diols which are in particular selected from the group consisting of polytetramethylene ether glycols, polypropylene ether glycols, ethylene oxide-capped polypropylene ether glycols and mixtures thereof.

**9.** A curable polyurethane casting resin system according to claim 5, wherein said amine hardener and said isocyanate resin are present in a ratio of from about 32:68 to 40:60 weight %, in particular from about 35:65 to 39:61 weight %.

**10.** A curable polyurethane casting resin system according to claim 5, wherein said isocyanate resin comprises the reaction product of ethylene oxide-capped polypropylene ether glycol or polytetramethylene ether glycol and methylenebis(4-cyclohexyl isocyanate) and isophorone diisocyanate.

**11.** A method of producing polyurethane castings, comprising the steps of:
i) mixing an isocyanate resin and an amine hardener according to claim 1,
ii) pouring said mixture into a mould, and
iii) leaving said mixture in said mould at a temperature and for a sufficient time to allow the mixture to solidify and to form a casting.

**12.** A centrifugal casting method of producing polyurethane castings, comprising the steps of:

a) heating an isocyanate resin and an amine hardener according to claim 1, in order to facilitate the ease of mixing the components,
b) mixing said isocyanate resin and said amine hardener;
c) partially filling a casting mould with said mixture;
d) closing the casting mould;
e) subjecting said casting mould to a rotation around at least one axis of rotation until said mixture has solidified to form a polyurethane casting; and
f) removing said polyurethane casting from the casting mould.

**13.** A surface casting method of producing polyurethane castings, comprising the steps of:
a) mixing an isocyanate resin and an amine hardener according to claim 1;
b) degassing said mixture;
c) pouring said mixture into a surface casting mould;
d) curing said mixture at about room temperature for a time which is sufficient to form a polyurethane casting; and
e) demoulding said polyurethane casting.

**14.** An amine hardener according to claim 1, comprising diethyltoluenediamine and a 4,4'-methylenedianiline which is substituted in at least one ortho-position to each amino group with an alkyl group, in a molar ratio of from about 50:50 to 5:95.

**Claims for the following Contracting State : ES**

**1.** A method of curing a polyurethane casting resin system, comprising the mixing of an amine hardener and an isocyanate-terminated polymer based on polyisocyanates and polyols, wherein the amine hardener comprises diethyltoluenediamine and a 4,4'-methylenedianiline which is substituted in at least one ortho-position to each amino group with an alkyl group, in a molar ratio of from about 99:1 to 1:99.

**2.** A method according to claim 1, wherein the alkyl-substituted 4,4'-methylenedianiline is 4,4'-methylenebis(ortho-ethylaniline).

**3.** A method according to claim 1, wherein said amine hardener further comprises a plasticizer which is in particular selected from the group consisting of dialkyl phthalates, alkylbenzyl phthalates, dialkyl adipates, benzoic esters of a dialkylene glycol, glutaric esters, epoxidized vegetable oils, alkyldiaryl phosphates, triaryl phosphates and N-substituted pyrrolidones.

**4.** A method according to claim 1, wherein the plasticizer is dibutyl phthalate.

**5.** A method according to claim 1, wherein the isocyanate component of said isocyanate-terminated polymers is an aliphatic, cycloaliphatic or araliphatic polyisocyanate which is preferably selected from the group consisting of methylenebis(4-cyclohexyl isocyanate), isophorone diisocyanate and m-xylylene diisocyanate.

**6.** A method according to claim 1, wherein said polyols are selected from the group consisting of polyether diols, polyether triols, polyether tetraols and polyester polyols.

**7.** A method according to claim 6, wherein said polyols are polyether diols which are in particular selected from the group consisting of polytetramethylene ether glycols, polypropylene ether glycols, ethylene oxide-capped polypropylene ether glycols and mixtures thereof.

**8.** A method according to claim 1, wherein said amine hardener and said isocyanate resin are present in a ratio of from about 32:68 to 40:60 weight %, in particular from about 35:65 to 39:61 weight %.

**9.** A method according to claim 1, wherein said isocyanate resin comprises the reaction product of ethylene oxide-capped polypropylene ether glycol or polytetramethylene ether glycol and methylenebis(4-cyclohexyl isocyanate) and isophorone diisocyanate.

**10.** A method according to claim 1 of producing polyurethane castings, comprising the steps of:

i) mixing an isocyanate resin and an amine hardener according to claim 1,
ii) pouring said mixture into a mould, and
iii) leaving said mixture in said mould at a temperature and for a sufficient time to allow the mixture to solidify and to form a casting.

**11.** A centrifugal casting method according to claim 1 of producing polyurethane castings. comprising the steps of:
a) heating an isocyanate resin and an amine hardener according to claim 1, in order to facilitate the ease of mixing the components,
b) mixing said isocyanate resin and said amine hardener;
c) partially filling a casting mould with said mixture;
d) closing the casting mould;
e) subjecting said casting mould to a rotation around at least one axis of rotation until said mixture has solidified to form a polyurethane casting; and
f) removing said polyurethane casting from the casting mould.

**12.** A surface casting method according to claim 1 of producing polyurethane castings, comprising the steps of:
a) mixing an isocyanate resin and an amine hardener according to claim 1;
b) degassing said mixture;
c) pouring said mixture into a surface casting mould;
d) curing said mixture at about room temperature for a time which is sufficient to form a polyurethane casting; and
e) demoulding said polyurethane casting.

**13.** A method according to claim 1, wherein the amine hardener comprises diethyltoluenediamine and a 4,4'-methylenedianiline which is substituted in at least one ortho-position to each amino group with an alkyl group, in a molar ratio of from about 50:50 to 5:95.

**Revendications**
**Revendications pour les Etats contractants suivants : DE, FR, GB, IT, NL, SE**

**1.** Durcisseur à base d'amines contenant une diéthyltoluènediamine et une 4,4'-méthylènedianiline qui est substituée par un groupe alkyle en au moins une position ortho par rapport à chaque groupe amino, en un rapport molaire d'environ 99:1 à environ 1:99.

**2.** Durcisseur à base d'amines selon la revendication 1, caractérisé en ce que la 4,4'-méthylènedianiline alkylée est la 4,4'-méthylènebis(ortho-éthylaniline).

**3.** Durcisseur à base d'amines selon la revendication 1, caractérisé en ce qu'il contient en outre un plastifiant qui est choisi en particulier dans le groupe constitué par des esters dialkyliques de l'acide phtalique, des esters alkylbenzyliques de l'acide phtalique, des esters dialkyliques de l'acide adipique, des benzoates de dialkylèneglycol, des esters de l'acide glutarique; des huiles végétales époxydées; des alkyldiarylphosphates, des triarylphosphates ou des pyrrolidones N-substituées.

**4.** Durcisseur à base d'amines selon la revendication 3, caractérisé en ce que le plastifiant est le phtalate de dibutyle.

**5.** Système de résine de coulée à base de polyuréthane durcissable, contenant un durcisseur à base d'amines selon la revendication 1 et un polymère à terminaisons isocyanate à base de polyisocyanates et de polyols.

**6.** Système de résine de coulée à base de polyuréthane durcissable selon la revendication 5, caractérisé en ce que le constituant isocyanate dudit polymère à terminaisons isocyanate est un polyisocyanate aliphatique, cycloaliphatique ou araliphatique, qui est choisi de préférence dans le groupe constitué par le méthylènebis(4-isocyanatocyclohexane), le diisocyanate d'isophorone et le diisocyanate de m-xylylène.

7. Système de résine de coulée à base de polyuréthane durcissable selon la revendication 5, caractérisé en ce que lesdits polyols sont choisis dans le groupe constitué par des polyétherdiols, des polyéthertriols, des polyéthertétrols et des polyesterpolyols.

8. Système de résine de coulée à base de polyuréthane durcissable selon la revendication 7, caractérisé en ce que lesdits polyols sont des polyétherdiols qui sont choisis en particulier dans le groupe constitué par les polytétraméthylèneétherglycols, les polypropylèneétherglycols, les polypropylèneétherglycols masqués par de l'oxyde d'éthylène et leurs mélanges.

9. Système de résine de coulée à base de polyuréthane durcissable selon la revendication 5, caractérisé en ce que ledit durcisseur à base d'amines et ladite résine isocyanate sont présents en un rapport d'environ 32:68 à environ 40:60 % en masse, en particulier d'environ 35:65 à 39:61 % en masse.

10. Système de résine de coulée à base de polyuréthane durcissable selon la revendication 5, caractérisé en ce que ladite résine isocyanate comprend le produit de réaction d'un polypropylèneétherglycol masqué avec de l'oxyde d'éthylène ou de polytétraméthylèneétherglycol avec du méthylènebis(4-isocyanatocyclohexane) ou du diisocyanate d'isophorone.

11. Procédé de préparation de pièces coulées en polyuréthane comprenant les étapes selon lesquelles
    i) on mélange une résine isocyanate et un durcisseur à base d'amines selon la revendication 1;
    ii) on verse ledit mélange dans un moule;
    iii) on laisse ledit mélange dans ledit moule à une température et pendant un intervalle de temps tels que le mélange se solidifie et forme une pièce coulée.

12. Procédé de coulée centrifuge pour la préparation de pièces coulées en polyuréthane comprenant les étapes selon lesquelles:
    a) on chauffe la résine isocyanate et le durcisseur à base d'amines selon la revendication 1 pour faciliter le mélange des constituants;
    b) on mélange ladite résine isocyanate et ledit durcisseur à base d'amines;
    c) on remplit partiellement un moule de coulée avec ledit mélange;
    d) on ferme le moule de coulée;
    e) on met ledit moule de coulée en rotation autour d'au moins un axe de rotation, jusqu'à ce que ledit mélange se soit solidifié en formant une pièce coulée en polyuréthane;
    f) on retire ladite pièce coulée en polyuréthane du moule de coulée.

13. Procédé de coulée en surface pour la préparation de pièces coulées en polyuréthane, comprenant les étapes selon lesquelles:
    a) on mélange la résine isocyanate et le durcisseur à base d'amines selon la revendication 1;
    b) on dégaze ledit mélange;
    c) on verse ledit mélange dis un moule de coulée pour une coulée en surface;
    d) on durcit ledit mélange autour de la température ambiante pendant un temps qui suffit à la formation d'une pièce coulée en polyuréthane; et
    e) on retire ladite pièce coulée en polyuréthane du moule.

14. Durcisseurs à base d'amines selon la revendication 1, contenant une diéthyltoluènediamine et une 4,4'-méthylènedianiline substituée par un groupe alkyle en au moins une position ortho par rapport à chaque groupe amine, en un rapport molaire d'environ 50:50 à 5:95.

**Revendications pour l'Etat contractant suivant : ES**

1. Procédé de durcissement de systèmes de résines de coulée à base de polyuréthanes, comprenant le mélange d'un durcisseur à base d'amines et d'un polymère à terminaisons isocyanate à base de polyisocyanates et de polyols, caractérisé en ce que le durcisseur à base d'amines contient une diéthyltoluènediamine et une 4,4'-méthylènedianiline qui est substituée par un groupe alkyle en au moins une position ortho par rapport à chaque groupe amino, en un rapport molaire d'environ 99:1 à environ 1:99.

2. Procédé selon la revendication 1, caractérisé en ce que la 4,4'-méthylènedianiline alkylée est la 4,4'-méthylènebis(ortho-éthylaniline).

3. Procédé selon la revendication 1, caractérisé en ce que ledit durcisseur à base d'amines contient en outre un plastifiant qui est choisi en particulier dans le groupe constitué par des esters dialkyliques de l'acide phtalique, des esters alkylbenzyliques de l'acide phtalique, des esters dialkyliques de l'acide adipique, des benzoates de dialkylèneglycol, des esters de l'acide glutarique; des huiles végétales époxydées; des alkyldiarylphosphates, des triarylphosphates ou des pyrrolidones N-substituées.

4. Procédé selon la revendication 1, caractérisé en ce que le plastifiant est le phtalate de dibutyle.

5. Procédé selon la revendication 1, caractérisé en ce que le constituant isocyanate dudit polymère à terminaisons isocyanate est un polyisocyanate aliphatique, cycloaliphatique ou araliphatique, qui est choisi de préférence dans le groupe constitué par le méthylènebis(4-isocyanatocyclohexane), le diisocyanate d'isophorone et le diisocyanate de m-xylylène.

6. Procédé selon la revendication 1, caractérisé en ce que lesdits polyols sont choisis dans le groupe constitué par des polyétherdiols, des polyéthertriols, des polyéthertétrols et des polyesterpolyols.

7. Procédé selon la revendication 6, caractérisé en ce que lesdits polyols sont des polyétherdiols qui sont choisis en particulier dans le groupe constitué par les polytétraméthylèneétherglycols, les polypropylèneétherglycols, les polypropylèneétherglycols masqués par de l'oxyde d'éthylène et leurs mélanges.

8. Procédé selon la revendication 1, caractérisé en ce que ledit durcisseur à base d'amines et ladite résine isocyanate sont présents en un rapport d'environ 32:68 à environ 40:60 % en masse, en particulier d'environ 35:65 à 39:61 % en masse.

9. Procédé selon la revendication 1, caractérisé en ce que ladite résine isocyanate comprend le produit de réaction d'un polypropylèneétherglycol masqué avec de l'oxyde d'éthylène ou de polytétraméthylèneétherglycol avec du méthylènebis(4-isocyanatocyclohexane) ou du diisocyanate d'isophorone.

10. Procédé selon la revendication 1 pour la préparation de pièces coulées en polyuréthane comprenant les étapes selon lesquelles
   i) on mélange une résine isocyanate et un durcisseur à base d'amines selon la revendication 1;
   ii) on verse ledit mélange dans un moule;
   iii) on laisse ledit mélange dans ledit moule à une température et pendant un intervalle de temps tels que le mélange se solidifie et forme une pièce coulée.

11. Procédé de coulée centrifuge selon la revendication 1 pour la préparation de pièces coulées en polyuréthane comprenant les étapes selon lesquelles:
   a) on chauffe la résine isocyanate et le durcisseur à base d'amines selon la revendication 1 pour faciliter le mélange des constituants;
   b) on mélange ladite résine isocyanate et ledit durcisseur à base d'amines;
   c) on remplit partiellement un moule de coulée avec ledit mélange;
   d) on ferme le moule de coulée;
   e) on met ledit moule de coulée en rotation autour d'au moins un axe de rotation, jusqu'à ce que ledit mélange se soit solidifié en formant une pièce coulée en polyuréthane;
   f) on retire ladite pièce coulée en polyuréthane du moule de coulée.

12. Procédé de coulée en surface selon la revendication 1 pour la préparation de pièces coulées en polyuréthane, comprenant les étapes selon lesquelles:
   a) on mélange la résine isocyanate et le durcisseur à base d'amines selon la revendication 1;
   b) on dégaze ledit mélange;
   c) on verse ledit mélange dans un moule de coulée pour une coulée en surface;
   d) on durcit ledit mélange autour de la température ambiante pendant un temps qui suffit à la formation d'une pièce coulée en polyuréthane; et
   e) on retire ladite pièce coulée en polyuréthane du moule.

**13.** Procédé selon la revendication 1, caractérisé en ce que le durcisseur à base d'amines contient une diéthyltoluènediamine et une 4,4'-méthylènedianilinesubstituée par un groupe alkyle en au moins une position ortho par rapport à chaque groupe amine, en un rapport molaire d'environ 50:50 à 5:95.